# EUROPEAN PATENT APPLICATION

(11) **EP 1 441 401 A1**
(43) Date of publication of application: **28.07.2004**
(21) Application number: 03001682.8
(22) Date of filing: 25.01.2003
(51) Int. Cl.: H01M 2/10

(54) **Battery module structure of electrical vehicle**

(71) Applicant: Pihsiang Machinery MFG. Co., Ltd., Hsin Feng Hsiang, Hsinchu County (TW)
(72) Inventor: Wu, Donald P.H., Hsinchu County, Taiwan (CN)
(74) Representative: Basfeld, Rainer, Dr. Dipl.-Phys.

(57) **Abstract**

A battery module structure is mounted on an electrical vehicle, including a retention frame mounted to a bar of a chassis of the electrical vehicle. The retention frame includes a top wall connected to the bar by opposite side walls whereby a space is formed between the top wall and the bar for accommodating the battery module. The battery module has a bottom face in which a groove is defined to fit over the bar and a top face on which a peg is formed. A mounting member forming a V-shaped opening is fixed to the top wall of the retention frame for receiving the peg. A lock member is pivoted to one arm of the mounting member and is biased by a spring to have a portion thereof extending into the V-shaped opening to engage and fix the peg of the battery module thereby securing the battery module in the retention frame. The retention frame has a back wall on which three electrodes are mounted. The electrodes are respectively and releasably engageable with jacks of the battery module to supply power to the vehicle. One of the electrodes is a grounding terminal for allowing for direct charging the battery module on the vehicle.

## Description

### BACKGROUND OF THE INVENTION

### 1. Field of the Invention

The present invention relates generally to an electrical vehicle, such as electrical and medical scooters, and in particular to a battery module structure of the electrical vehicle.

### 2. The Related Arts

The improvement of technology and medical care extends life of human beings. The old and the disabled are best benefited from the modem technology and medical care. A lot of different supportive devices have been developed for helping the old and the disabled to transport themselves in an extended area so as to improve their living standard without particular care by other supporting medical personnel. Wheelchairs have been one of the most commonly known supportive devices for the old and the disabled to transport themselves in short distances. However, for those very weak or those having hand or arm injured, they still need other people's help in moving the wheelchairs.

Electrical vehicles for medical purposes, such as wheelchairs and medical scooters, which are equipped with electrical motors, allow a person to move oneself without great effort and thus are particularly suitable for those whose arms are weak or injured. The electrically powered vehicles are also advantageous as compared with conventional vehicles equipped with engines powered by fossil fuels for environmental protection.

Since the electrical vehicles are driven by electrical power, the quality and durability of battery modules that power the electrical vehicles are of vital importance to the performance of the electrical vehicles. Reliable supply of electrical power to the motors of the electrical vehicles is another major concern of the electrical vehicles. Traditionally, the battery module of an electrical vehicle is secured to a chassis of the vehicle in a very simple manner, not taking into consideration vibration and shocks acting upon the battery module during the moving of the electrical vehicle. Thus, power failure caused by vibration often occurs.

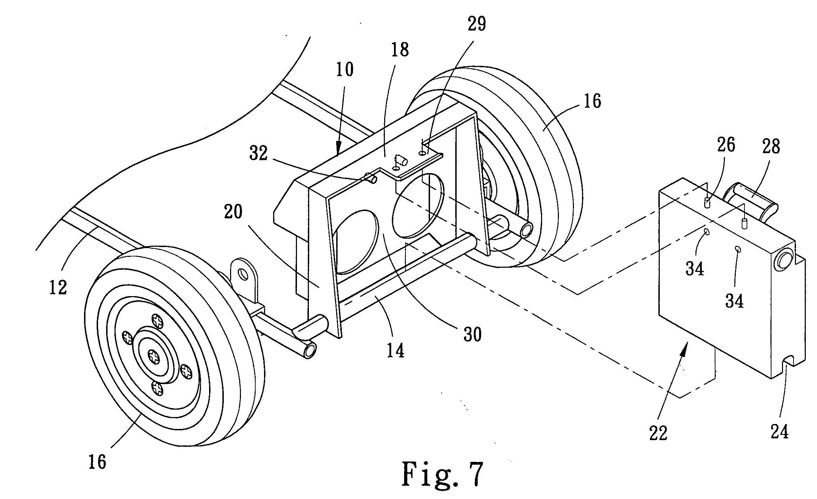

Figure 7 of the attached drawings shows a known technique for securing a battery module to a vehicle chassis, which is superior to the conventional manner of securing battery module to a vehicle chassis. The battery module securing device illustrated in Figure 7 comprises a retention frame 10 fixed on a tail bar 14 of a chassis 12 of the electrical vehicle and between two rear wheels 16 of the electrical vehicle. The retention frame 10 comprises a top wall 18 that is opposite to and spaced from the tail bar 14 and two opposite side walls 20 connecting the top wall 18 to the tail bar 14 whereby a space (not labeled) is defined between the top wall 18, side walls 20 and the tail bar 14 for accommodating a battery module 22 therein. The battery module 22 has a bottom (not labeled) in which a groove 24 is formed for fitting over the tail bar 14 thereby supporting the battery module 22 on the tail bar 14. The battery module 22 also has a top face (not labeled) to which two lock pins 26 are mounted. The lock pins 26 are movable in an axial direction thereof between withdrawn position and extended position. A handle 28 is rotatably mounted to the battery module 22 and is coupled to the lock pins 26. Thus, rotating the handle 28 in a first direction moves the lock pins toward the extended position where the lock pins 28 extend into and engage with holes 29 defined in the top wall 18 of the retention frame 10 thereby securing the battery module 22 in the retention frame 10. When the handle 28 is rotated in a reversed second direction, the lock pins 26 are driven to the withdrawn position and disengage from the holes 29 to release the battery module 22 from the retention frame 10.

The securing device illustrated in Figure 7 is effective in securing the battery module 22 to the chassis 12. However, the movable lock pins 26 and the rotatable handle 28 complicate the structure of the battery module 22 and increase the overall costs of manufacturing.

Electrical connection of the conventional battery module securing device is two electrode type, comprising two peg-like terminals 32 respectively connected to opposite electrodes of the motor. The battery module 22 is provided with two jacks 34 for receivingly mating the terminals 32 of the battery module securing device to supply electrical power to the motor. These terminals are hot and neutral terminals and no grounding terminal is provided to the battery module securing device. Thus, it is not possible to directly charge the battery module 22 in the electrical vehicle. In other words, the battery module 22 must be removed from the vehicle first before it is recharged. This makes the charging operation troublesome.

### SUMMARY OF THE INVENTION

Thus, an object of the present invention is to provide a battery module structure that allows for simplification of the battery module of electrical vehicles.

Another object of the present invention is to provide a device for retaining a battery module in an electrical vehicle, the device comprising, besides hot and neutral terminals for supplying electrical power to a motor of the vehicle, a grounding terminal to allow for directly re-charging the battery module in the vehicle.

A further object of the present invention is to provide a safety-enhanced battery module for electrical vehicle, comprising an electrical circuit in which a breaker is included for automatically shutting off power supplied to the vehicle.

To achieve the above objects, in accordance with the present invention, there is provided a battery module structure to be mounted on an electrical vehicle. The battery module is received in a retention frame mounted to a bar of a chassis of the electrical vehicle. The retention frame comprises a top wall connected to the bar by opposite side walls whereby a space is formed between the top wall and the bar for accommodating the battery module. The battery module has a bottom face in which a groove is defined to fit over the bar and a top face on which a peg is formed. A mounting member forming a V-shaped opening is fixed to the top wall of the retention frame for receiving the peg. A lock member is pivoted to one arm of the mounting member and is biased by a spring to have a portion thereof extending into the V-shaped opening to engage and fix the peg of the battery module thereby securing the battery module in the retention frame. The retention frame has a back wall on which three electrodes are mounted. The electrodes are respectively and releasably engageable with jacks of the battery module to supply power to the vehicle. One of the electrodes is a grounding terminal for allowing for direct charging the battery module on the vehicle. A breaker is included in a circuit of the battery module for automatically cutting of the supply of power from the battery module in case of abnormal supply of power.

### BRIEF DESCRIPTION OF THE DRAWINGS

The present invention will be apparent to those skilled in the art by reading the following description of a preferred embodiment thereof, with reference to the attached drawings, in which:

Figure 1 is a perspective view of an electrical vehicle in which a battery module structure constructed in accordance with the present invention is embodied;

Figure 2 is a perspective view, partially exploded, of the battery module structure of the present invention;

Figure 3 is a perspective view showing the condition before a battery module is mounted to an electrical vehicle;

Figure 4 is similar to Figure 3 but showing the battery module partly mounted to the electrical vehicle;

Figure 5 is a perspective view showing the battery module is completely mounted to the electrical vehicle;

Figure 6 is a perspective view of the battery module of the present invention; and

Figure 7 is a perspective view of a conventional battery module securing device with the battery module separated therefrom.

### DETAILED DESCRIPTION OF THE PREFERRED EMBODIMENT

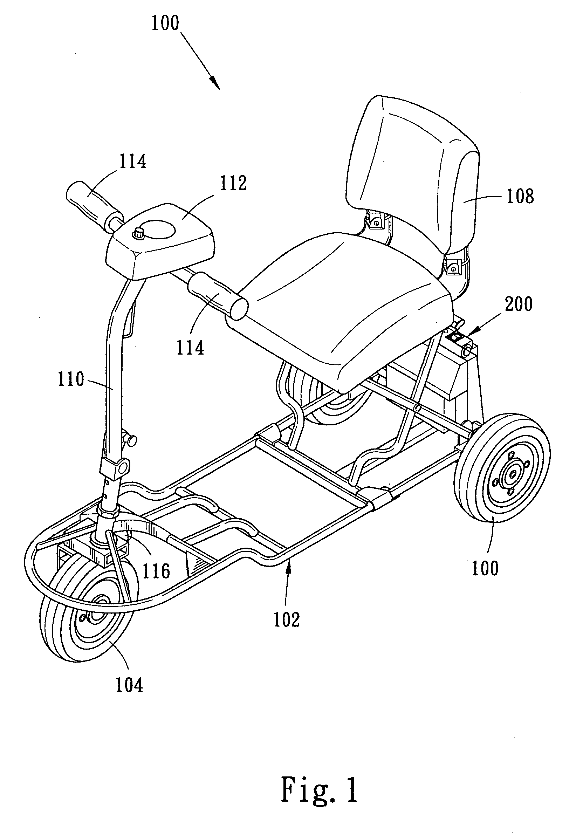

With reference to the drawings and in particular to Figure 1, an electrical vehicle in which a battery module structure in accordance with the present invention is embodied is made in the form of a medical scooter, generally designated with reference numeral 100, comprising a chassis 102 having front and rear ends (not labeled) to which a front wheel 104 and two rear wheels 106 are respectively mounted. A seat 108 is mounted on the chassis 102 in the proximity of the rear end of the chassis 102. A steering shaft 110 is rotatably mounted to the front end of the chassis 102 in a substantially upright manner and is allowed to freely rotate with respect to the chassis 102. The steering shaft 110 has a lower end to which the front wheel 104 is mounted. A control device 112 is mounted to an opposite upper end of the steering shaft 110. Two handles 114 are mounted to the upper end of the steering shaft 110 and extend in opposite directions from opposite sides of the steering shaft 110 for hand holding to control the moving direction of the vehicle 100.

The electrical scooter 100 further comprises an electrical motor 116 that is controlled by the control device 112. The motor 116 is mounted to one side of the front wheel 104 and is mechanically coupled to the front wheel 104 for driving the front wheel 104.

An electrical power supply system 200 is arranged on the chassis 102 between the two rear wheels 106 for supply of electrical power to the motor 116.

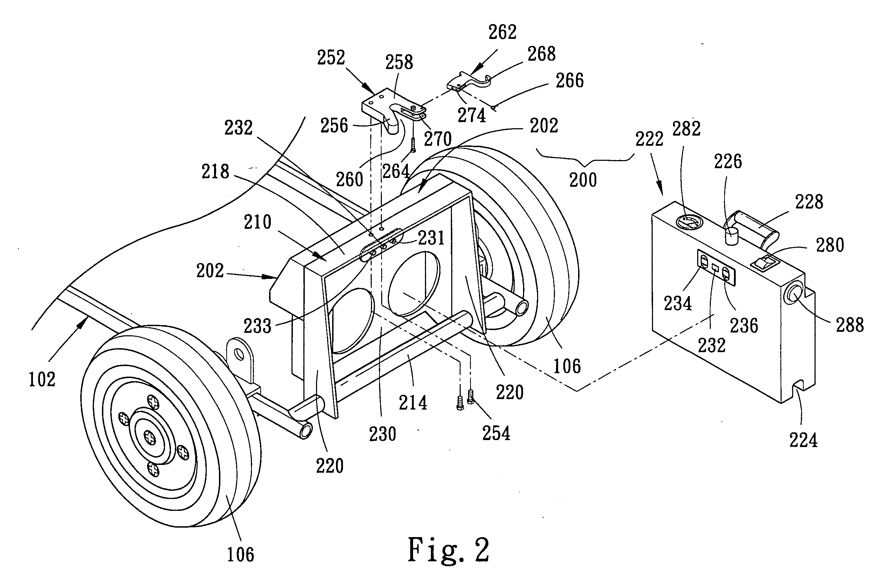

Also referring to Figure 2, the electrical power supply system 200 comprises a battery module 222 and a battery module retention device 202 for securely retaining the battery module 222 on the chassis 102 of the electrical scooter 100. The battery module retention device 202, which will be simply referred to as "retention device" hereinafter, comprises a retention frame 210 fixed on a tail bar 214 of the chassis 102 of the electrical scooter 100 and between the rear wheels 106. The retention frame 210 comprises a top wall 218 that is opposite to and spaced from the tail bar 214 of the chassis 102.

The retention frame 210 further comprises two side walls 220 opposite to each other and connecting between the top wall 218 and the tail bar 214 to form a receiving space therebetween for accommodating the battery module 222 therein. The battery module 222 has top and bottom faces (not labeled). The top and bottom faces are opposite to and spaced from each other, the spacing therebetween being substantially corresponding to a distance between the top wall 218 and the tail bar 214. A groove 224 is defined in the bottom face of the battery module 222 and is fit over the tail bar 214 for supporting the battery module 222 on the tail bar 214. An upward-extending fixed peg 226 is formed on the top face of the battery module 222. A handle 228 is mounted to the battery module 222 for hand gripping by a user.

The retention device 202 further comprises locker means (not labeled) comprised of a mounting member 252 fixed to the top wall 218 of the retention frame 210 by fasteners 254, such as bolts. The mounting member 252 comprises two arms 256, 258 diverging from each other to define a V-shaped opening 260 into which the peg 226 of the battery module 222 is selectively received. A lock member 262 is pivoted to the arm 258 by a pivot pin 264 and is thus movable between a secured position and a released position.

The lock member 262 is biased by a resilient or biasing element 266, such as a torsional spring, toward the secured position where a portion of the lock member 262 extends into the V-shaped opening 260 of the mounting member 252 to engage and thus fix the peg 226 in the V-shaped opening 260. This secures the battery module 222 in the retention frame 210.

The lock member 262 comprises a manual operation tab 268 that is manually accessible and operable to move the lock member 262 from the secured position toward the released position where the portion of the lock member 262 is withdrawn from the V-shaped opening 260, disengaging from the peg 226 and thus freeing the peg 226 from the mounting member 252. This releases the battery module 222 from the retention frame 210.

In the embodiment illustrated, the arm 258 of the mounting member 252 defines a slot 270 in which the lock member 262 is rotatably received. The pivot pin 264 extends through aligned holes 272 defined in opposite side walls (not labeled) of the slot 270 and a hole 274 defined in the lock member 262 to pivot the lock member 262 to the mounting member 252. The torsional spring 266 that is made in a helical form encompasses the pivot pin 264 and has opposite ends (not labeled) respectively attached to the arm 258 of the mounting member 252 and the lock member 262. In stead of forming the slot 270 and positioning the lock member 262 in the slot 270, it is apparent to those having ordinary skills to directly mount the lock member 262 to an outside surface of the arm 258 by the pivot pin 264 without formation of the slot 270.

The retention frame 210 has a back wall 230 in which three electrodes 231, 232, 233 are mounted. The electrodes 231, 232, 233 are respectively engageable with jacks 234, 235, 236 defined in the battery module 222 when the battery module 222 is retained in the retention frame 210. The battery module 222 supplies electrical power to the motor 116 of the vehicle 100 by means of the engagement between the electrodes 231, 232 and the jacks 234, 235. The electrode 233 serves as a grounding terminal connectable with the grounding jack 235 of the battery module 222 to form a grounding path. Thus the vehicle 100 is directly connectable with an external power source (not shown) to re-charge the battery module 222 and no disassembling the battery module 222 from the vehicle 100 is needed in charging the battery module 222. The battery module 222 has a power connector 286 for connection with the external power source. A dust cap 288 is removably attached to the power connector 286 for protection purposes.

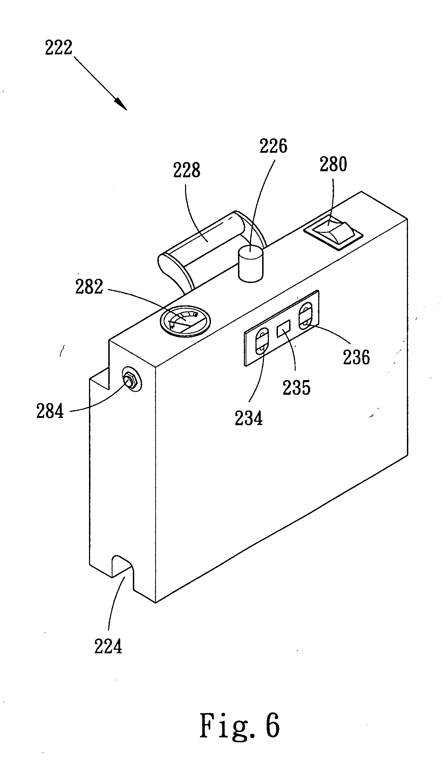

Also referring to Figure 6, the battery module 222 has an activation switch 280 for selectively turning on/off the battery module 222. When the switch 280 is turned off, the supply of electrical power from the battery module 222 is cut off. The battery module 222 further comprises a power level indicator 282 for indicating the level of power stored in the battery module 222. A breaker 284 is incorporated in a control circuit (not shown) of the battery module 222 for automatically shutting off power supply in case of abnormal supply of electrical power from the battery module 222. Preferably, the breaker 284 is an overload breaker which shutting off the power supply in an overloading condition. This provides protection to the battery module 222 and the motor 116 of the vehicle 100.

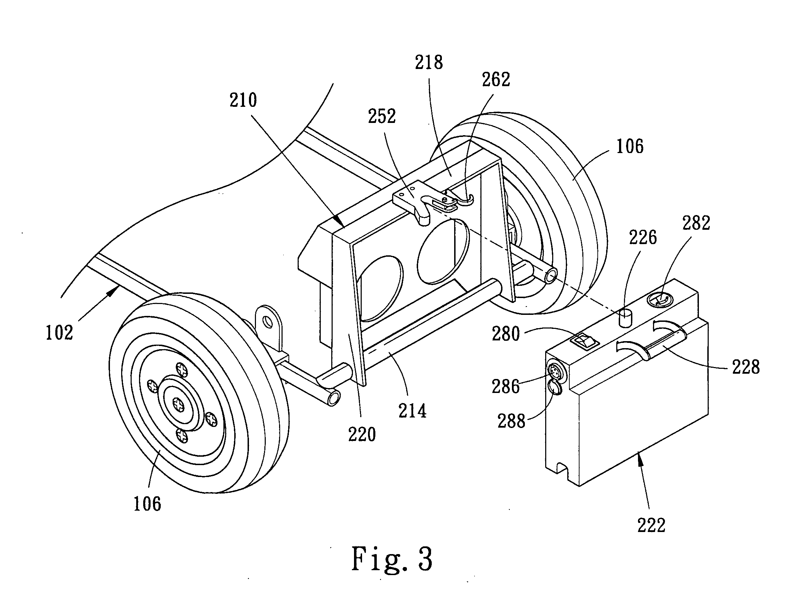

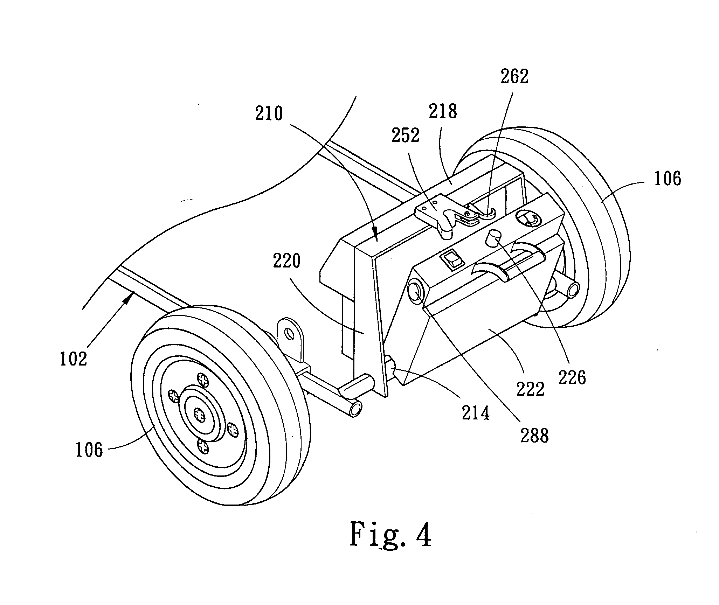

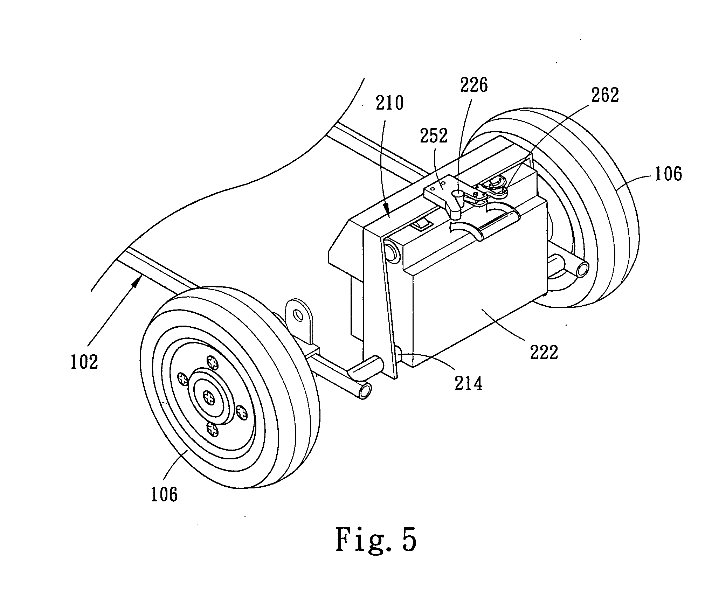

Figures 3-5 shows the process of mounting the battery module 222 to the retention frame 210. An operator (not shown) holds the handle 228 to position the battery module 222 close to the retention frame 210 as shown in Figure 3. The operator then positions the battery module 222 on the tail bar 214 by fitting the bottom groove 224 over the tail bar 214 as shown in Figure 4. Thereafter, the top peg 226 of the battery module 222 is moved toward the mounting member 252 to have the peg 226 received in the V-shaped opening 260. In the process of entering the V-shaped opening 260, the peg 226 engages and thus drives the portion of the lock member 262 that is biased into the opening 260 in a direction against the spring 266, forcing the lock member 262 to return to the released position so as to allow the peg 226 to get into the V-shaped opening 260.

The biasing force of the spring 266 returns the lock member 262 back to the secured position when the peg 226 is completely received in the V-shaped opening 260 thereby securing the peg 226 in the mounting member 252.

To dismount the battery module 222 from the retention frame 210, the lock member 262 is manually moved against the biasing spring 266 to the released position. This disengages the lock member 262 from the peg 226 and frees the peg 226 from the V-shaped opening 260 of the mounting member 252 as shown in Figure 4. The battery module 222 may now be detached from the retention frame 210 by simply lifting and separating the battery module 210 from the tail bar 214. The battery module 222 is thus completely removed out of the retention frame 210.

Although the present invention has been described with reference to the preferred embodiment thereof, it is apparent to those skilled in the art that a variety of modifications and changes may be made without departing from the scope of the present invention which is intended to be defined by the appended claims.

## Claims

1. A battery module adapted to be mounted to an electrical vehicle comprising a chassis having front and rear wheels and a motor mounted to the chassis and drivingly coupled to the wheels, the battery module comprising a mounting device and a locking device for securely attaching the battery module to the chassis and supplying power to the motor

2. The battery module as claimed in Claim 1, wherein the battery module comprises a switch.

3. The battery module as claimed in Claim 1, wherein the battery module comprises a power level indicator.

4. The battery module as claimed in Claim 1, wherein the battery module comprises a control circuit in which an overload breaker is included for automatically shutting off power supply from the battery module in an abnormal situation.

5. The battery module as claimed in Claim 1, wherein the battery module comprises a plurality of electrodes, at least one of which is a grounding terminal.

6. The battery module as claimed in Claim 1, wherein the battery module comprises a power connector for connection with the external power source and a dust cap removably attached to the power connector for protection purposes.

7. The battery module as claimed in Claim 1, wherein the battery module comprises a handle for hand gripping.

8. A battery module structure adapted to be mounted to an electrical scooter comprising a chassis having front and rear wheels and a motor coupled to the wheels for driving the wheels, the battery module structure comprising:
an electrical power supply system comprising:
a battery module having opposite top and bottom faces, the bottom face defining a groove and the top face forming a peg, and
a battery module retention device comprising:
a retention frame mounted to a bar of the chassis, comprising a top wall connected to the bar by opposite side walls whereby a space is formed between the top wall and the bar for accommodating the battery module with the groove fit over the bar,
a mounting member fixed to the top wall of the retention frame and comprising two arms spaced from each other to define an opening therebetween for receiving the peg of the battery module,
a lock member pivoted to one of the arms and movable between a secured position wherein a portion of the lock member extends into the opening of the mounting member and engageable with the peg to retain the peg in the opening and a released position where the portion of the lock member is withdrawn from the opening of the mounting member to free the peg from the mounting member, and
a biasing element arranged between the mounting member and the lock member for biasing the lock member toward the secured position to secure the battery module in the retention frame.

9. The battery module structure as claimed in Claim 8, wherein said one of the arms of the mounting member defines a slot for movably receiving the lock member therein, a pin extending through aligned holes defined in said one of the arms and the lock member to pivotally fix the lock member in the slot, allowing the lock member to move with respect to the mounting member between the secured position and the released position.

10. The battery module structure as claimed in Claim 9, wherein the biasing element comprises a torsional spring encompassing the pin and having opposite ends respectively attached to said one of the arms and the lock member.

11. The battery module structure as claimed in Claim 8, wherein the lock member comprises a manual operation tab for manually moving the lock member against the biasing element toward the released position to release the peg from the mounting member.

12. The battery module structure as claimed in Claim 8,wherein the retention frame further comprises a back wall on which a plurality of electrodes are mounted for releasably engaging jacks formed in the battery module, at least one of the electrodes being a grounding terminal.

13. The battery module as claimed in Claim 12, wherein three electrodes are mounted to the back wall, two of the three electrodes supplying electrical power to the vehicle and the remaining one of the electrodes being a grounding terminal.

14. The battery module structure as claimed in Claim 8, wherein the battery module comprises an activation switch.

15. The battery module structure as claimed in Claim 8, wherein the battery module comprises a power level indicator.

16. The battery module structure as claimed in Claim 8, wherein the battery module comprises a control circuit in which a breaker is included for automatically shutting off power supply from the battery module in an abnormal situation.

17. The battery module structure as claimed in Claim 8, wherein the battery module comprises a plurality of electrodes, at least one of which is a grounding terminal.

18. The battery module structure as claimed in Claim 8, wherein the battery module comprises a power connector for selective connection with an external power source for re-charging the battery module and a dust cap selectively engaging the power connector.
